# EUROPEAN PATENT SPECIFICATION

(11) **EP 3 284 575 B1**
(45) Date of publication and mention of the grant of the patent: **17.03.2021**
(21) Application number: 16779985.7
(22) Date of filing: 08.04.2016
(51) Int. Cl.: B29C 48/29, B29C 48/285

(54) **EXTRUSION MOLDED ARTICLE, METHOD FOR PRODUCING SAME, MOLDING RAW MATERIAL FOR EXTRUSION MOLDING, AND METHOD FOR PRODUCING SAME**
STRANGGEPRESSTER ARTIKEL, VERFAHREN ZUR HERSTELLUNG DAVON, FORMROHMATERIAL ZUM STRANGPRESSEN UND VERFAHREN ZUR HERSTELLUNG DAVON
ARTICLE MOULÉ PAR EXTRUSION, PROCÉDÉ DE PRODUCTION DE CE DERNIER, MATIÈRE PREMIÈRE DE MOULAGE POUR MOULAGE PAR EXTRUSION, ET PROCÉDÉ DE PRODUCTION CORRESPONDANT

(30) Priority: 15.04.2015 JP 2015083636
(43) Date of publication of application: 21.02.2018
(73) Proprietor: Shin-Etsu Polymer Co., Ltd., Chiyoda-ku Tokyo 101-0041 (JP)
(72) Inventor: HONDA, Masayuki, Saitama-shi Saitama 331-0811 (JP); KUSAKA, Toshimitsu, Saitama-shi Saitama 331-0811 (JP)
(74) Representative: Maiwald Patent- und Rechtsanwaltsgesellschaft mbH
(86) International application number: PCT/JP2016/061578
(87) International publication number: WO 2016/167194

(56) References cited:
- EP-A2- 0 258 900
- EP-A2- 0 319 828
- WO-A1-2008/007798
- JP-A- S5 214 643
- JP-A- 2003 213 141
- JP-A- 2006 321 885
- JP-A- 2007 514 054
- JP-A- 2011 225 875
- US-A- 3 609 104
- US-A- 3 627 836
- US-A- 4 361 655
- US-A- 5 082 891
- Silicones Product Department: "RTV Silicone Rubber", General Electric , 15 September 2008 (2008-09-15), XP002783876, Retrieved from the Internet: URL:https://archive.org/stream/TNM_General _Electric_-_RTV_Silicone_rubber_brochu_201 70630_0094#page/n11 [retrieved on 2018-08-09]
- Wacker-Chemie GmbH, Silicones Divison: "Wacker Silicone Fluids AK", Wacker-Chemie GmbH, Silicones Divison , 1 January 2002 (2002-01-01), XP002783877, Retrieved from the Internet: URL:http://www.behlke.com/pdf/wacker_silic one_oil.pdf [retrieved on 2018-08-06]

## Description

### Technical Field

The present invention relates to an extrusion molded article and a method for producing the same. The present invention also relates to a molding raw material for extrusion, and a method for producing the same.

### Background Art

Conventionally, in order to crosslink and cure a liquid material low in viscosity to obtain a molded article, a method such as an injection molding or a cast molding has been used. For example, Patent Literature 1 describes performing of cast molding involving use of a resin composition having a viscosity of 10 to 100 Pa*s (100 poises to 1000 poises) .

In addition, Patent Literature 2 describes performing of injection molding involving use of a liquid rubber material. Patent Literature 3 describes a method for producing an extrusion molded article from a silicone rubber composition, including 1 to 10 wt.-% of vulcanized particulate silicone rubber. Patent Literature 4 discloses a method of producing a melt-processed molded article, which is not an extrusion molding. Patent Literature 5 describes a filler for use in synthetic resins.

### Citation List

### Patent Literature

[Patent Literature 1] Japanese Unexamined Patent Publication No. 2000-271938
[Patent Literature 2] Japanese Unexamined Patent Publication No. 2004-74431
[Patent Literature 3] United States Patent US 4,361,655 A
[Patent Literature 4] United States Patent US 3,609,104 A
[Patent Literature 5] Japanese Patent Publication No. S52 14643 A

### Summary of Invention

### Technical Problem

An injection molding method and a cast molding method are each so-called a batch-type molding method, whose productivity depends on the number of molds and the number of apparatuses for injecting a raw material, and the production efficiency thereof thus tends to be inferior to that of extrusion, which is a continuous method.

Examples of a thermosetting resin that can be extruded include a millable material of silicone and an EPDM rubber compound, and these are high in viscosity and therefore easily transported by an extruder, and can allow pressure generation in a die to be formed into a die port shape and then transported to a curing step while keeping the shape after discharge. On the other hand, a liquid material low in viscosity is difficult to transport by an extruder and cannot be shaped with a die to thereby immediately occur deformation of the shape of a discharged product, and therefore it is difficult to apply extrusion thereto.

An object of the present invention is to provide a method for producing an extrusion molded article, the method being capable of producing a molded article having a composition similar to that of a molded article of a low-viscosity liquid material by extrusion.

Another object of the present invention is to provide an extrusion molded article having a composition similar to that of a molded article of a low-viscosity liquid material and molded by extrusion.

Still another object of the present invention is to provide a molding raw material for extrusion, the raw material enabling obtaining a molded article by extrusion without significantly altering the composition of the molded article from that when using a low-viscosity liquid material, and a method for producing the same.

### Solution to Problem

One aspect of the present invention relates to a method for producing an extrusion molded article, comprising a step of extruding a molding raw material to obtain an extrusion molded article, wherein the molding raw material is a mixture of a first liquid material including liquid silicone rubber, and a crosslinked particle obtained by dynamically crosslinking a second liquid material including liquid silicone rubber, the viscosity at 23°C of the first liquid material is less than 600 Pa·s, measured with a BH-type rotational viscometer in conditions of 23°C, a No.7 spindle and 20 rpm, and the viscosity at 23°C of the molding raw material is 600 Pa·s or more, measured with a capillary type viscometer in conditions of 23°C, a die of 1 mm in diameter and 10 mm in length, and a shear rate of 121.6 s⁻¹, wherein the amount of the crosslinked particle in the molding raw material is 35% by mass or more and 85% by mass or less, based on the total amount of the molding raw material.

Still another aspect of the present invention relates to a molding raw material for extrusion, the molding raw material being a mixture of a first liquid material including liquid silicone rubber and having a viscosity at 23°C of less than 600 Pa·s, measured with a BH-type rotational viscometer in conditions of 23°C, a No.7 spindle and 20 rpm, and a crosslinked particle obtained by dynamically crosslinking a second liquid material including liquid silicone rubber, the molding raw material having a viscosity at 23°C of 600 Pa·s or more, measured with a capillary type viscometer in conditions of 23°C, a die of 1 mm in diameter and 10 mm in length, and a shear rate of 121.6 s⁻¹, wherein the amount of the crosslinked particle in the molding raw material is 35% by mass or more and 85% by mass or less, based on the total amount of the molding raw material.

Still another aspect of the present invention relates to an extrusion molded article prepared by extruding the molding raw material.

Still another aspect of the present invention relates to a method for producing a molding raw material for extrusion, comprising a step of blending a crosslinked particle obtained by dynamically crosslinking a second liquid material including liquid silicone rubber, into a first liquid material including liquid silicone rubber and having a viscosity at 23°C of less than 600 Pa·s, measured with a BH-type rotational viscometer in conditions of 23°C, a No.7 spindle and 20 rpm, to obtain a molding raw material for extrusion having a viscosity at 23°C of 600 Pa·s or more, measured with a capillary type viscometer in conditions of 23°C, a die of 1 mm in diameter and 10 mm in length, and a shear rate of 121.6 s⁻¹, wherein the amount of the crosslinked particle in the molding raw material is 35% by mass or more and 85% by mass or less, based on the total amount of the molding raw material.

### Advantageous Effects of Invention

According to the present invention, provided is a method for producing an extrusion molded article, the method being capable of producing a molded article having a composition similar to that of a molded article of a low-viscosity liquid material and molded by extrusion molding. In addition, according to the present invention, provided is an extrusion molded article having a composition similar to that of a molded article of a low-viscosity liquid material and molded by extrusion. Furthermore, according to the present invention, provided are a molding raw material for extrusion, the raw material enabling obtaining a molded article by extrusion without significantly altering the composition of the molded article from that when using a low-viscosity liquid material, and a method for producing the same.

### Description of Embodiments

Suitable embodiments of the present invention will be described below.

A production method according to the present embodiment comprises a step of extruding a molding raw material to obtain an extrusion molded article, and the molding raw material in the production method is a mixture of a first liquid material and a crosslinked particle obtained by dynamically crosslinking a second liquid material.

The viscosity at 23°C of the first liquid material is less than 600 Pa·s, and the viscosity at 23°C of the molding raw material is 600 Pa·s or more. Herein, the viscosity of the liquid material refers to a viscosity measured with a BH-type rotational viscometer in conditions of 23°C, a No.7 spindle and 20 rpm. In addition, the viscosity of the molding raw material refers to a viscosity measured with a capillary type viscometer in conditions of 23°C, a die of 1 mm in diameter and 10 mm in length, and a shear rate of 121.6 s⁻¹.

The first liquid material is difficult to apply to extrusion because the viscosity thereof is less than 600 Pa·s. In the production method according to the present embodiment, production of a molded article by extrusion is realized by thickening the first liquid material by the crosslinked particle to provide a molding raw material having a viscosity of 600 Pa·s or more.

In one mode according to the claimed invention (hereinafter, optionally referred to as "first mode"), each of the first liquid material and the second liquid material may include liquid silicone rubber. In such a mode, the crosslinked particle is a particle including a silicone-based polymer, and therefore an extrusion molded article including the silicone-based polymer can be obtained whose composition is similar to that in the case of curing only the first liquid material.

In another mode that is not claimed herein (hereinafter, optionally referred to as "second mode"), each of the first liquid material and the second liquid material may include a urethane raw material. In such a mode, the crosslinked particle is a particle including a urethane resin, and therefore an extrusion molded article including the urethane resin can be obtained whose composition is similar to that in the case of curing only the first liquid material.

That is, according to the production method according to the present embodiment, a molded article whose composition is similar to that in the case of curing the first liquid material can be efficiently produced by extrusion.

Herein, the phrase "composition is similar" means, for example, that the same kind of resin is included as an ingredient in each composition, or that the main resin in each composition is of the same kind. Molded articles whose composition are similar to each other tend to have properties close to each other, and, for example, a molded article having properties close to those of a molded article obtained by curing the first liquid material can be efficiently produced by extrusion, in the production method according to the present embodiment. In the present invention, however, molded articles whose composition are similar to each other are not limited to those having properties close to each other, and any molded article obtained may have properties different from those of a cured product of the first liquid material.

The viscosity at 23°C of the first liquid material is less than 600 Pa·s, preferably 300 Pa·s or less, more preferably 150 Pa·s or less. The first liquid material is lower in the viscosity, thereby resulting in tendencies to enhance the crosslinking density of a molded article and thus to further enhance the rubber elasticity of a molded article. More specifically, for example, the first liquid material is lower in the viscosity, thereby resulting in tendencies to decrease the molecular weight of a raw material compound included in the first liquid material to thereby increase the density of a crosslinking group in the first liquid material and thus to increase the crosslinking density of a molded article. Herein, the lower limit of the viscosity at 23°C of the first liquid material is not particularly limited, and may be, for example, 0.02 Pa·s or more, or 0.1 Pa·s or more.

In the first mode, the first liquid material is a curable material including liquid silicone rubber, and may be, for example, a material that can be cured by heating.

The liquid silicone rubber may be one that provides a rubberlike molded body by crosslinking and curing.

The liquid silicone rubber may be addition-type liquid silicone rubber, condensation-type liquid silicone rubber, or UV-curing type liquid silicone rubber. In addition, the liquid silicone rubber may be one-pack type liquid silicone rubber or two-pack type liquid silicone rubber.

Examples of the addition-type liquid silicone rubber include those including vinyl polysiloxane (vinyl group-containing polysiloxane), hydrogen polysiloxane (silylidyne group (Si-H)-containing polysiloxane) and a catalyst. The catalyst is a catalyst that allows an addition reaction of vinyl polysiloxane and hydrogen polysiloxane to occur, and may include, for example, a platinum complex or a rhodium complex. The catalyst may be a thermally activatable catalyst or an optically activatable (UV-activatable) catalyst.

Examples of the condensation-type liquid silicone rubber include those including silanol group-containing polysiloxane and/or polysiloxane containing a group (hereinafter, optionally referred to as "hydrolyzable group") that generates a silanol group by hydrolysis. Examples of the hydrolyzable group include an acetoxy group, an enoxy group, an oxime group, and an alkoxy group. In the case where acetoxy group-containing polysiloxane is contained, acetic acid is generated by a condensation reaction; in the case where enoxy group-containing polysiloxane is contained, acetone is generated by a condensation reaction; in the case where oxime group-containing polysiloxane is contained, oxime is generated by a condensation reaction; and in the case where an alkoxy group-containing polysiloxane is contained, alcohol is generated by a condensation reaction. Therefore, these polysiloxane-containing liquid silicone rubbers may be referred to as acetic acid-type liquid silicone rubber, acetone-type liquid silicone rubber, oxime-type liquid silicone rubber, and alcohol-type liquid silicone rubber, respectively. In addition, the condensation-type liquid silicone rubber may further contain a condensation catalyst that promotes a condensation reaction of a silanol group and a hydrolyzable group. Examples of the condensation catalyst include a tin-based catalyst such as dibutyl tin bis(isooctylphthalate) and a titanium-based catalyst such as 1,3-propanedioxytitanium bis(ethylacetate).

Examples of the UV-curing type liquid silicone rubber include those including (meth)acryloyloxy group-containing polysiloxane and a photoinitiator, and those including vinyl polysiloxane, mercaptoalkyl group-containing polysiloxane and a photoinitiator.

The reaction systems of the one-pack type liquid silicone rubber and the two-pack type liquid silicone rubber each may be any of addition-type, condensation-type, and UV-curing type. In the two-pack type liquid silicone rubber, a component involving in the reaction is divided to two packs, and such liquids are mixed and used before initiation of the reaction. Herein, in the liquid silicone rubber, a component involving in the reaction may be divided to three or more liquids.

Examples of the two-pack type liquid silicone rubber include addition-type liquid silicone rubber including a first liquid containing vinyl polysiloxane and hydrogen polysiloxane, and a second liquid containing vinyl polysiloxane and an addition reaction catalyst.

Other examples of the two-pack type liquid silicone rubber include condensation-type liquid silicone rubber including a first liquid including hydrolyzable group-containing polysiloxane and a condensation catalyst, and a second liquid including silanol group-containing polysiloxane.

The weight average molecular weight of the liquid silicone rubber may be, for example, 5.0 × 10² or more, or 3.0 × 10³ or more. In addition, the weight average molecular weight of the liquid silicone rubber may be, for example, 2.5 × 10⁶ or less, or 6.5 × 10⁵ or less.

In the first mode, the first liquid material may include one or more of the liquid silicone rubbers.

The content of the liquid silicone rubber in the first liquid material may be, for example, 20% by mass or more, or 50% by mass or more, based on the total amount of the first liquid material.

In the first mode, the first liquid material may further include a crosslinking agent. The crosslinking agent here refers to a compound to be introduced as a bridging component into a molecule, or a compound that initiates or promotes crosslinking of silicone rubber. Any crosslinking agent may be used as long as that can crosslink the liquid silicone rubber, and examples thereof include a hydrosilylation crosslinking agent, a complex catalyst of platinum, palladium or rhodium (for example, a thermally activatable platinum catalyst such as a reaction product of chloroplatinic acid and monohydric alcohol, and a complex of chloroplatinic acid and olefins, and an optically activatable platinum catalyst (an optically activatable platinum catalyst generally also has thermal activity) such as bis(acetylacetonato)platinum and cyclopentadienyl trimethyl platinum), organic peroxides, alkyl silicates, a tin-based or titanium-based condensation catalyst, and a benzoyl-based photoinitiator.

In the first mode, the content of the crosslinking agent in the first liquid material is not particularly limited, and can be appropriately adjusted depending on the mode of the curing reaction of the liquid silicone rubber.

In the case where the liquid silicone rubber is condensation-type liquid silicone rubber, the content of the crosslinking agent may be, for example, 0% by mass, or 0.005% by mass or more, and 20% by mass or less, or 5% by mass or less, based on the total amount of the first liquid material. In addition, the content of the crosslinking agent may be, for example, 0 parts by mass, or 0.005 parts by mass or more, and 60 parts by mass or less, or 45 parts by mass or less, relative to 100 parts by mass of the liquid silicone rubber.

In the case where the liquid silicone rubber is addition-type or UV-curing type liquid silicone rubber, the content of the crosslinking agent may be, for example, 0.005% by mass or more, or 0.3 parts by mass or more, and 20% by mass or less, or 15% by mass or less, based on the total amount of the first liquid material. In addition, the content of the crosslinking agent may be, for example, 0.005 parts by mass or more, or 0.5 parts by mass or more, and 45 parts by mass or less, or 30 parts by mass or less, relative to 100 parts by mass of the liquid silicone rubber.

In the first mode, the first liquid material may further include a component other than the liquid silicone rubber and the crosslinking agent. Examples thereof include an agent for controlling crosslinking reaction, a filler, a modifier, a pigment, a conductive material, and a heat-transfer agent.

Examples of the agent for controlling crosslinking reaction include acetylene, alcohols, cyclic vinylsiloxane and a triazole compound.

Examples of the filler include Celite, silica, carbon black, graphite, talc, clay, calcium carbonate, mica, glass chopped strand, a glass powder, cellulose, titanium oxide, boron nitride, and magnesium oxide.

Examples of the modifier include an antistatic agent, a surface gloss adjuster, a heat stabilizer, a weathering stabilizer, an impact resistant agent, a flexible material such as oil and gum, a sliding agent, a flame retardant, a heat resistance improver, and a foaming agent.

In the second mode, which is not claimed herein, the first liquid material is a curable material including a urethane raw material, and may be, for example, a material that can be cured by heating.

The urethane raw material may include, for example, isocyanate and polyol. The isocyanate is a compound having two or more isocyanate groups (-NCO) in one molecule, and the polyol is a compound having two or more hydroxyl groups (-OH) in one molecule. Herein, the urethane raw material may further include, in addition to the above, a compound that reacts with the isocyanate, such as polyamine and aminoalcohol.

Examples of the isocyanate include diphenylmethane diisocyanate, polymeric methane diisocyanate, tolylene diisocyanate, hexamethylene diisocyanate, and polymethylene polyphenyl polyisocyanate.

Examples of the polyol include polyester polyols, polycarbonate polyols, and polyether polyols. In addition, low-molecular alcohol having two or more hydroxyl groups can also be used as the polyol. Examples of such low-molecular alcohol include alkane diols such as diethylene glycol, 1,4-butanediol, 1,6-hexanediol and cyclohexanediol, trimethylol propane, and pentaerythritol.

In the second mode, which is not claimed herein, the first liquid material may include one or more of the isocyanates and one or more of the polyols.

The urethane raw material may be here, for example, a mixture of the isocyanate and the polyol that forms a crosslinked structure by one reaction. Alternatively, the urethane raw material may be, for example, such that a crosslinked structure is formed by preliminarily reacting the isocyanate and the polyol to prepare a urethane prepolymer with a hydroxyl group terminal or an isocyanate group terminal, and then reacting the isocyanate or the polyol with the urethane prepolymer. Herein, the urethane prepolymer with a hydroxyl group terminal can be classified to the polyol, and the urethane prepolymer with an isocyanate group terminal can be classified to the isocyanate.

In the second mode, which is not claimed herein, it is preferable that the compositional ratio of the isocyanate and the polyol in the first liquid material be adjusted so that the equivalent ratio of the isocyanate group and the hydroxyl group, [NCO]/[OH], is 0.8 to 1.2. The total amount of the isocyanate and the polyol in the first liquid material may be, for example, 40% by mass or more, or 60% by mass or more, and 100% by mass, or 98% by mass or less, based on the total amount of the first liquid material.

In the second mode, which is not claimed herein, the first liquid material may further include a catalyst. The catalyst may be a urethane-forming catalyst or a crosslinking catalyst, and may be any catalyst as long as that can catalyze the addition reaction of the isocyanate and the polyol. Examples of the catalyst include a titanium catalyst such as tetrabutyl titanate, a zirconium complex catalyst, and an amine catalyst such as a tertiary amine compound.

In the second mode, which is not claimed herein, the content of the catalyst in the first liquid material may be, for example, 0% by mass, or 0.0003% by mass or more, and 5% by mass or less, or 3% by mass or less, based on the total amount of the first liquid material.

In the second mode, which is not claimed herein, the first liquid material may include the urethane raw material and further a component other than the urethane raw material. Examples of such a component include a filler, a modifier, a pigment, a conductive material, and a heat-transfer agent.

Examples of the filler include Celite, silica, carbon black, graphite, talc, clay, calcium carbonate, mica, glass chopped strand, a glass powder, cellulose, titanium oxide, boron nitride, and magnesium oxide.

Examples of the modifier include an antistatic agent, a surface gloss adjuster, a heat stabilizer, a weathering stabilizer, an impact resistant agent, a flexible material such as oil and gum, a sliding agent, a flame retardant, an ion conducting agent, and a foaming agent.

The second liquid material according to the present embodiment is a material that can produce a crosslinked particle by dynamic crosslinking.

The viscosity at 23°C of the second liquid material is preferably less than 600 Pa·s, more preferably 300 Pa·s or less, further preferably 150 Pa·s or less. Such a second liquid material can allow a crosslinked particle of a suitable average particle size described below to be easily obtained by dynamic crosslinking.

The lower limit of the viscosity at 23°C of the second liquid material is not particularly limited, and it may be, for example, 0.02 Pa·s or more, or 0.1 Pa·s or more.

In the first mode, the second liquid material may include liquid silicone rubber. Examples of the liquid silicone rubber include the same liquid silicone rubbers as for the first liquid material described above.

In the first mode, the liquid silicone rubber included in the second liquid material may be the same as or different from the liquid silicone rubber included in the first liquid material. In other words, in the first mode, the production method comprises a step of providing the liquid silicone rubber, wherein the first liquid material may include a portion of the liquid silicone rubber and the second liquid material may include the remaining portion of the liquid silicone rubber. Alternatively, in the production method, the first liquid material may include a first liquid silicone rubber and the second liquid material may include a second liquid silicone rubber.

In the first mode, the second liquid material may include one or more of the liquid silicone rubbers. The content of the liquid silicone rubber in the second liquid material may be, for example, 20% by mass or more, or 40% by mass or more, and 100% by mass, 99.5% by mass or less, or 98% by mass or less, based on the total amount of the second liquid material.

In the first mode, the second liquid material may further include a crosslinking agent. Any crosslinking agent may be used as long as that can crosslink the liquid silicone rubber, and examples of the crosslinking agent include the same crosslinking agents as for the first liquid composition described above.

In the first mode, the content of the crosslinking agent in the second liquid material is not particularly limited, and can be appropriately adjusted depending on the mode of the curing reaction of the liquid silicone rubber in the second liquid material.

In the case where the liquid silicone rubber in the second liquid material is condensation-type liquid silicone rubber, the content of the crosslinking agent may be, for example, 0% by mass, or 0.01% by mass or more, and 25% by mass or less, or 10% by mass or less based on the total amount of the second liquid material. In addition, the content of the crosslinking agent may be, for example, 0 parts by mass, or 0.01 parts by mass or more, and 70 parts by mass or less, or 50 parts by mass or less, relative to 100 parts by mass of the liquid silicone rubber.

In the case where the liquid silicone rubber in the second liquid material is addition-type or UV-curing type liquid silicone rubber, the content of the crosslinking agent may be, for example, 0.01% by mass or more, or 0.5 parts by mass or more, and 25% by mass or less, or 20% by mass or less, based on the total amount of the second liquid material. In addition, the content of the crosslinking agent may be, for example, 0.01 parts by mass or more, or 1 part by mass or more, and 50 parts by mass or less, or 40 parts by mass or less, relative to 100 parts by mass of the liquid silicone rubber.

In the first mode, the second liquid material may further contain a thermoplastic resin. When the thermoplastic resin is blended, bridging flocculation between particles tends to be suppressed in dynamic crosslinking, resulting in easily obtaining a crosslinked particle of a suitable average particle size described below.

The thermoplastic resin is preferably a thermoplastic resin incompatible with the liquid silicone rubber, and examples of such a thermoplastic resin include polyether-based thermoplastic polyurethanes, polyester-based thermoplastic polyurethanes, and polycarbonate-based thermoplastic polyurethanes.

In the first mode, the content of the thermoplastic resin in the second liquid material may be, for example, 0 to 5% by mass, 15% by mass or more, or 20% by mass or more, and 70% by mass or less, or 60% by mass or less, based on the total amount of the second liquid material.

In the first mode, the second liquid material may further include a component other than the liquid silicone rubber, the crosslinking agent and the thermoplastic resin. Examples of such a component include an agent for controlling crosslinking reaction, a filler, a modifier, a pigment, a conductive material, and a heat-transfer agent. Specific examples of these include the same as above.

In the second mode, which is not claimed herein, the second liquid material may include a urethane raw material. Examples of the urethane raw material include the same as above.

In the second mode, which is not claimed herein, the urethane raw material included in the second liquid material may be the same as or different from the urethane raw material included in the first liquid material. In other words, in the second mode, the production method comprises a step of providing the urethane raw material, wherein the first liquid material may include a portion of the urethane raw material and the second liquid material may include the remaining portion of the urethane raw material. Alternatively, in the production method, the first liquid material may include a first urethane raw material, and the second liquid material may include a second urethane raw material.

In the second mode, which is not claimed herein, the second liquid material may include one or more of the urethane raw materials. That is, the second liquid material may include one or more of the isocyanates and one or more of the polyols.

In the second mode, which is not claimed herein, it is preferable that the compositional ratio of the isocyanate and the polyol in the second liquid material be adjusted so that the equivalent ratio of the isocyanate group and the hydroxyl group, [NCO]/[OH], is 0.8 to 1.2. The total amount of the isocyanate and the polyol in the second liquid material may be, for example, 20% by mass or more, or 40% by mass or more, and 100% by mass, or 98% by mass or less, based on the total amount of the second liquid material.

In the second mode, which is not claimed herein, the second liquid material may further include a catalyst. The catalyst may be a urethane-forming catalyst or a crosslinking catalyst, and may be any catalyst as long as that can catalyze the addition reaction of the isocyanate and the polyol. Examples of such a catalyst include the same as above.

In the second mode, which is not claimed herein, the content of the catalyst in the second liquid material may be, for example, 0% by mass, or 0.0003% by mass or more, and 5% by mass or less, or 3% by mass or less, based on the total amount of the second liquid material.

In the second mode, which is not claimed herein, the second liquid material may further include a component other than the liquid silicone rubber and the crosslinking agent. Examples of such a component include a filler, a modifier, a pigment, a conductive material, and a heat-transfer agent. Specific examples of these include the same as above.

In the production method according to the present embodiment, the crosslinked particle is obtained by dynamically crosslinking the second liquid material.

The average particle size of the crosslinked particle is preferably 300 µm or less, more preferably 100 µm or less, further preferably 30 µm or less, and may be 10 µm or less. A crosslinked particle having such an average particle size can allow the extrusion moldability of the molding raw material to be enhanced and also allow an extrusion molded article having a smooth surface and higher strength to be obtained. In addition, it is preferable in view of easiness of formation by dynamic crosslinking that the average particle size of the crosslinked particle be 0.1 µm or more.

Herein, the average particle size of the crosslinked particle refers to a value determined by photography with a shape measurement laser microscope VK-X210 manufactured by Keyence Corporation and automatic calculation with image analysis software Mac-View. More specifically, a composition including the crosslinked particle (for example, a molding raw material) is thinly spread on a glass plate, a photograph is taken at a magnification of VK-X210 of 400-fold (optionally 200- to 800-fold), the average value of the diameter of the circle of equal perimeter is automatically calculated by use of Mac-View, and the average value is defined as the average particle size.

The dynamic crosslinking can be performed, for example, using a continuous or batch-type kneader while rotating a screw or a rotor to allow a crosslinking reaction to proceed.

The crosslinking temperature in the dynamic crosslinking can be appropriately adjusted depending on the composition of the second liquid material, and may be, for example, 20°C to 70°C, 70°C to 130°C, or 130°C to 230°C.

In the production method according to the present embodiment, the molding raw material is a mixture of the first liquid material and the crosslinked particle. In the production method according to the present embodiment, the viscosity at 23°C of the molding raw material is 600 Pa·s or more, thereby enabling molding by an extrusion, and thus a molded article can be efficiently produced.

The viscosity at 23°C of the molding raw material is 600 Pa·s or more, preferably 700 Pa·s or more, more preferably 800 Pa·s or more. In addition, the viscosity at 23°C of the molding raw material may be 3000 Pa·s or less, or 2500 Pa·s or less in view of ensuring a sufficient extrusion rate easily.

The molding raw material may be thickened by blending the crosslinked particle into the first liquid material. The molding raw material may be prepared by mixing components for the first liquid material and the crosslinked particle.

The amount of the crosslinked particle in the molding raw material may be appropriately adjusted depending on the desired viscosity, and may be, for example, 35% by mass or more, or 50% by mass or more, and 85% by mass or less, or 70% by mass or less, based on the total amount of the molding raw material.

Extrusion of the molding raw material can be performed using any of various known extrusion machines. Examples of such extrusion machines include a uniaxial extruder and a biaxial extruder.

The conditions of extrusion can be appropriately adjusted depending on the composition of the molding raw material, the form of a molded article, and the like. For example, the extrusion temperature may be -20°C to 230°C, 10°C to 230°C or -20°C to 60°C.

In the production method according to the present embodiment, the extrusion may be performed by using the molding raw material prepared in advance, or preparation and extrusion of the molding raw material may also be continuously performed in one extruder.

In the production method according to the present embodiment, the molding raw material may be prepared by using the crosslinked particle prepared in advance, preparation of the crosslinked particle and preparation of the molding raw material may be continuously performed in one extruder, or preparation of the crosslinked particle, preparation of the molding raw material and the extrusion may be continuously performed in one extruder.

That is, the production method according to the present embodiment may further comprise a step of mixing the first liquid material and the crosslinked particle to obtain the molding raw material, and may further comprise a step of dynamically crosslinking the second liquid material to obtain the crosslinked particle.

Examples of the extrusion molded article to be produced by the production method according to the present embodiment include tubular molded articles such as a tube, a hose and a pipe; packings such as a gasket, an airtight material for window frames, and a weather strip; rolls such as a development roll and a fixation roll; anti-slipping materials such as a non-slip sheet; protective members such as a corner guard; bar materials such as a round bar and a square bar; and wipers for wiping automotive window glass and building glass.

### Examples

Hereinafter, the present invention will be more specifically described with reference to Examples, but the present invention is not intended to be limited to such Examples.

### (Example 1)

### <Preparation of crosslinked particle (1)>

Crosslinked particle (1) was prepared from liquid silicone rubber KE-1950-40A (produced by Shin-Etsu Chemical Co., Ltd., viscosity: 530 Pa·s) and liquid silicone rubber KE-1950-40B (produced by Shin-Etsu Chemical Co., Ltd., viscosity: 530 Pa·s) with Labo Plastomill 4C150·R60 roller mixer (product name) manufactured by Toyo Seiki Seisaku-Sho, Ltd., according to the following method.

Labo Plastomill with a jacket temperature of 40°C was charged with 20.6 g of each of KE-1950-40A and KE-1950-40B. After charging, the jacket temperature was raised to 105°C at a rate of temperature rise of about 15°C/min, and kept at 105°C. Stirring was conducted by a rotor at a rotation speed of 50 rpm, the torque applied to the rotor was observed, the rotor was stopped at the time point when the increasing torque reached the peak and started to be decreased to obtain crosslinked particle (1). The average particle size of crosslinked particle (1) obtained was 23 µm.

### <Production of extrusion molded article>

Labo Plastomill with a jacket temperature of 23°C was charged with 25.0 g of crosslinked particle (1), 12.5 g of KE-1950-40A and 12.5 g of KE-1950-40B, and the resulting mixture was kneaded by a rotor at a rotation speed of 100 rpm for 4 minutes, to prepare a molding raw material. The viscosity of the obtained molding raw material was 1681 Pa·s.

The obtained molding raw material was fed to the barrel of Capillograph ID (product name) manufactured by Toyo Seiki Seisaku-Sho, Ltd., and was extruded through a die having a pore of 10 mm in length and 1 mm in diameter by pushing down of a piston. The temperatures of the barrel and the die were kept at 40°C.

The shear rate was varied to 60.8 sec⁻¹, 121 sec⁻¹, 243 sec⁻¹, 608 sec⁻¹, 1216 sec⁻¹, 2432 sec⁻¹ and 6080 sec⁻¹ to perform extrusion, and it was found that a string body extruded was extruded stably and continuously without snapping to fall at any shear rate. In addition, the shape of the string body extruded was sufficiently maintained.

### (Comparative Example 1)

Labo Plastomill with a jacket temperature of 23°C was charged with 20 g of KE-1950-40A and 20 g of KE-1950-40B, and the resulting mixture was kneaded by a rotor at a rotation speed of 100 rpm for 4 minutes, to prepare a molding raw material. The viscosity of the obtained molding raw material was 508 Pa·s.

The obtained molding raw material was fed to the barrel of Capillograph ID which was the same as in Example 1, and was extruded through a die by pushing down of a piston. The string body extruded, the cross section of which was not round and was an indeterminate form, snapped halfway and therefore was difficult to stably extrude. The string body extruded was also gradually deformed after extrusion and the shape thereof was not maintained.

### (Example 2)

### <Preparation of liquid material (1)>

Mixed were 65 parts by mass of polysiloxane having a viscosity of 30 Pa·s whose both terminals were blocked by dimethylvinylsiloxane, 30 parts by mass of polysiloxane having a viscosity of 20 Pa·s whose both terminals were blocked by trimethylsiloxane and which had a vinyl group in a side chain, 5 parts by mass of polysiloxane having a viscosity of 1 Pa·s whose both terminals were blocked by dimethylvinylsiloxane, 10 parts by mass of crystalline silica whose average particle size was 1 µm, and 5 parts by mass of acetylene black using a planetary mixer for 20 minutes, and the resultant was allowed to pass through a triple roll once to obtain a mixture.

The mixture, and 3.5 parts by mass of methyl hydrogen polysiloxane, 0.07 parts by mass of ethynylcyclohexanol, and 0.2 parts by mass of a platinum catalyst where the amount of Pt was 1% by mass were again mixed using a planetary mixer, to obtain liquid material (1) having a viscosity of 70 Pa·s.

### <Preparation of crosslinked particle (2)>

Labo Plastomill with a jacket temperature of 40°C was charged with 40 g of liquid material (1), and the jacket temperature was raised to 80°C at a rate of temperature rise of about 15°C/min, and kept at 80°C. Stirring was conducted by a rotor at a rotation speed of 50 rpm, the torque applied to the rotor was observed, the rotor was stopped at the time point when the increasing torque reached the peak and started to be decreased to obtain crosslinked particle (2). The average particle size of crosslinked particle (2) obtained was 9 µm.

### <Production of extrusion molded article>

Labo Plastomill with a jacket temperature of 23°C was charged with 22.0 g of crosslinked particle (2), 15 g of liquid material (1), 5 g of polysiloxane having a viscosity of 400 Pa·s whose both terminals were blocked by trimethylsiloxane and which had a vinyl group in a side chain, and 0.15 g of methyl hydrogen polysiloxane, and kneaded by a rotor at a rotation speed of 100 rpm for 4 minutes, to obtain a molding raw material. The viscosity of the obtained molding raw material was 898 Pa·s.

The obtained molding raw material was extruded in the same conditions as in Example 1, to obtain a string body. In Example 2, extrusion could be successfully performed at any shear rate. In addition, when the shear rate was constant, a string body whose diameter was substantially constant was extruded. In addition, the smoothness of the string body surface was favorable, and the shape maintainability of the string body was also favorable.

### (Comparative Example 2)

Liquid material (1) was prepared in the same manner as in Example 2. Labo Plastomill with a jacket temperature of 23°C was charged with 37 g of liquid material (1), 5 g of polysiloxane having a viscosity of 400 Pa·s whose both terminals were blocked by trimethylsiloxane and which had a vinyl group in a side chain, and 0.15 g of methyl hydrogen polysiloxane, and the resultant was kneaded with a rotor at a rotation speed of 100 rpm for 4 minutes, to obtain a molding raw material. The viscosity of the obtained molding raw material was 72 Pa·s.

The obtained molding raw material was a liquid composition low in viscosity, and therefore could not be extruded.

### (Example 3) (not claimed)

### <Preparation of crosslinked particle>

70 parts by mass of KE-1950-40A and 30 parts by mass of a urethane-based thermoplastic elastomer (produced by DIC Bayer Polymer Ltd., trade name: PANDEX8185FX) were kneaded with Labo Plastomill in conditions of 190°C and 110 rpm for 2 minutes, to prepare mixture (A1).

Next, 70 parts by mass of KE-1950-40B and 30 parts by mass of a urethane-based thermoplastic elastomer (produced by DIC Bayer Polymer Ltd., trade name: PANDEX8185FX) were kneaded with Labo Plastomill in conditions of 190°C and 110 rpm for 2 minutes, to prepare mixture (B1).

Labo Plastomill with a jacket temperature of 40°C was charged with 20 g of each of mixture (A1) and mixture (B1), and the jacket temperature was raised to 125°C at a rate of temperature rise of about 15°C/min and kept at 125°C. Stirring was conducted by a rotor at a rotation speed of 110 rpm, the torque applied to the rotor was observed, the rotor was stopped at the time point when the increasing torque reached the peak and started to be decreased, to obtain resin material (1) including crosslinked particle (3). In resin material (1) obtained, crosslinked particle (3) was dispersed in the urethane-based thermoplastic elastomer, and the average particle size thereof was 7 µm.

### <Production of extrusion molded article>

Labo Plastomill with a jacket temperature of 23°C was charged with 7 g of KE-1950-40A, 7 g of KE-1950-40B and 30 g of resin material (1), and the resultant was kneaded with a rotor at a rotation speed of 100 rpm for 4 minutes, to obtain a molding raw material. The viscosity of the obtained molding raw material was 1870 Pa·s.

The obtained molding raw material was extruded in the same conditions as in Example 1, to obtain a string body. In Example 3, extrusion could be successfully performed at any shear rate. In addition, when the shear rate was constant, a string body whose diameter was substantially constant was extruded. In addition, the smoothness of the string body surface was favorable and the shape maintainability of the string body was also favorable.

### (Example 4) (not claimed)

### <Preparation of crosslinked particle>

50 parts by mass of KE-1950-40A and 50 parts by mass of PANDEX8185FX were kneaded with Labo Plastomill in conditions of 190°C and 110 rpm for 2 minutes, to prepare mixture (A2).

Next, 50 parts by mass of KE-1950-40B and 50 parts by mass of PANDEX8185FX were kneaded with Labo Plastomill in conditions of 190°C and 110 rpm for 2 minutes, to prepare mixture (B2).

Labo Plastomill with a jacket temperature of 40°C was charged with 20 g of each of mixture (A2) and mixture (B2), and the jacket temperature was raised to 105°C at a rate of temperature rise of about 15°C/min and kept at 105°C. Stirring was conducted by a rotor at a rotation speed of 110 rpm, the torque applied to the rotor was observed, the rotor was stopped at the time point when the increasing torque reached the peak and started to be decreased, to obtain resin material (2) including crosslinked particle (4). In resin material (2) obtained, crosslinked particle (4) was a clay-like substance dispersed in the urethane-based thermoplastic elastomer, and the average particle size of crosslinked particle (4) was 3 µm.

### <Production of extrusion molded article>

Labo Plastomill with a jacket temperature of 23°C was charged with 3 g of KE-1950-40A, 3 g of KE-1950-40B and 39 g of resin material (2), and the resultant was kneaded with a rotor at a rotation speed of 100 rpm for 4 minutes, to obtain a molding raw material. The viscosity of the obtained molding raw material was 935 Pa·s.

The obtained molding raw material was extruded in the same conditions as in Example 1, to obtain a string body. In Example 4, extrusion could be successfully performed at any shear rate. In addition, when the shear rate was constant, a string body whose diameter was substantially constant was extruded. In addition, the smoothness of the string body surface was favorable and the shape maintainability of the string body was also favorable.

## Claims

1. A method for producing an extrusion molded article, comprising:
a step of extruding a molding raw material to obtain an extrusion molded article; wherein
the molding raw material is a mixture of a first liquid material including liquid silicone rubber, and a crosslinked particle obtained by dynamically crosslinking a second liquid material including liquid silicone rubber,
a viscosity at 23°C of the first liquid material is less than 600 Pa·s, measured with a BH-type rotational viscometer in conditions of 23°C, a No.7 spindle and 20 rpm; and
a viscosity at 23°C of the molding raw material is 600 Pa·s or more, measured with a capillary type viscometer in conditions of 23°C, a die of 1 mm in diameter and 10 mm in length, and a shear rate of 121.6 s⁻¹;
**characterised in that** the amount of the crosslinked particle in the molding raw material is 35% by mass or more and 85% by mass or less, based on the total amount of the molding raw material.

2. A molding raw material for extrusion, the molding raw material being a mixture of:
a first liquid material including liquid silicone rubber and having a viscosity at 23°C of less than 600 Pa·s, measured with a BH-type rotational viscometer in conditions of 23°C, a No.7 spindle and 20 rpm; and
a crosslinked particle obtained by dynamically crosslinking a second liquid material including liquid silicone rubber,
the molding raw material having a viscosity at 23°C of 600 Pa·s or more, measured with a capillary type viscometer in conditions of 23°C, a die of 1 mm in diameter and 10 mm in length, and a shear rate of 121.6 s⁻¹;
**characterised in that** the amount of the crosslinked particle in the molding raw material is 35% by mass or more and 85% by mass or less, based on the total amount of the molding raw material.

3. An extrusion molded article prepared by extruding the molding raw material according to claim 2.

4. A method for producing a molding raw material for extrusion, comprising:
a step of blending a crosslinked particle obtained by dynamically crosslinking a second liquid material including liquid silicone rubber, into a first liquid material including liquid silicone rubber and having a viscosity at 23°C of less than 600 Pa·s, measured with a BH-type rotational viscometer in conditions of 23°C, a No.7 spindle and 20 rpm, to obtain a molding raw material for extrusion having a viscosity at 23°C of 600 Pa·s or more, measured with a capillary type viscometer in conditions of 23°C, a die of 1 mm in diameter and 10 mm in length, and a shear rate of 121.6 s⁻¹;
**characterised in that** the amount of the crosslinked particle in the molding raw material is 35% by mass or more and 85% by mass or less, based on the total amount of the molding raw material.

## Patentansprüche

1. Ein Verfahren zur Herstellung eines Strangpressformteils, umfassend:
einen Schritt des Extrudierens eines Formrohmaterials um ein stranggepresstes Formteil zu erhalten; wobei
das Formrohmaterial eine Mischung ist aus einem ersten flüssigen Material umfassend flüssigen Silikonkautschuk, und einem vernetzten Partikel erhalten durch dynamisches Vernetzen eines zweiten flüssigen Materials umfassend flüssiges Silikonkautschuk,
eine Viskosität bei 23°C des ersten flüssigen Materials weniger als 600 Pa·s beträgt, gemessen mit einem BH-Typ Rotationsviskosimeter unter Bedingungen von 23°C, einer Nr. 7 Spindel und 20 Umdrehungen/min; und
eine Viskosität bei 23°C des Formrohmaterials 600 Pa·s oder mehr beträgt, gemessen mit einem Viskosimeter vom Kapillartyp unter Bedingungen von 23°C, einer Düse von 1 mm im Durchmesser und 10 mm Länge, und einer Schergeschwindigkeit von 121,6 s⁻¹;
**dadurch gekennzeichnet, dass**
die Menge der vernetzten Partikel in dem Formrohmaterial bei 35 Massen-% oder mehr und 85 Massen-% oder weniger liegt, basierend auf der gesamten Menge des Formrohmaterials.

2. Ein Formrohmaterial für Extrusion, wobei das Formrohmaterial eine Mischung ist aus:
einem ersten flüssigen Material umfassend flüssigen Silikonkautschuk und eine Viskosität bei 23°C von weniger als 600 Pa·s aufweisend, gemessen mit einem BH-Typ Rotationsviskosimeter unter Bedingungen von 23°C, einer Nr. 7 Spindel und 20 Umdrehungen/min; und
einem vernetzten Partikel erhalten durch dynamisches Vernetzen eins zweiten flüssigen Materials umfassend flüssigen Silikonkautschuk,
das Formrohmaterial aufweisend eine Viskosität bei 23°C von 600 Pa·s oder mehr, gemessen mit einem Viskosimeter vom Kapillartyp unter Bedingungen von 23°C, einer Düse von 1 mm im Durchmesser und 10 mm Länge, und einer Schergeschwindigkeit von 121,6 s⁻¹;
**dadurch gekennzeichnet, dass**
die Menge der vernetzten Partikel in dem Formrohmaterial 35 Massen-% oder mehr und 85 Massen-% oder weniger beträgt, basierend auf der gesamten Menge des Formrohmaterials.

3. Ein Strangpressformteil hergestellt durch Extrudieren des Formrohmaterials gemäß Anspruch 2.

4. Ein Verfahren zur Herstellung eines Formrohmaterials zum Strangpressen, umfassend:
einen Schritt des Einmischens eines vernetzten Partikels erhalten durch dynamisches Vernetzen eines zweiten flüssigen Materials umfassend flüssigen Silkonkautschuk, in ein erstes flüssiges Material umfassend flüssigen Silikonkautschuk und eine Viskosität bei 23°C von weniger als 600 Pa·s aufweisend, gemessen mit einem BH-Typ Rotationsviskosimeter unter Bedingungen von 23°C, einer Nr. 7 Spindel und 20 Umdrehungen/min, um ein Rohmaterial zum Strangpressen mit einer Viskosität bei 23°C von 600 Pa·s oder mehr zu erhalten, gemessen mit einem Viskosimeter vom Kapillartyp unter Bedingungen von 23°C, einer Düse von 1 mm im Durchmesser und 10 mm Länge und einer Schergeschwindigkeit von 121,6 s⁻¹;
**dadurch gekennzeichnet, dass**
die Menge der vernetzten Partikel in dem Formrohmaterial 35 Massen-% oder mehr und 85 Massen-% oder weniger beträgt, basierend auf der gesamten Menge des Formrohmaterials.

## Revendications

1. Un procédé de production d'un article moulé par extrusion, comprenant :
une étape d'extrusion d'une matière première de moulage pour obtenir un article moulé par extrusion ;
la matière première de moulage étant un mélange d'une première matière liquide comprenant du caoutchouc silicone liquide, et une matière particulaire réticulée obtenue par le fait de réticuler dynamiquement une deuxième matière liquide comprenant du caoutchouc silicone liquide,
une viscosité à 23°C de la première matière liquide étant inférieure à 600 Pa·s, mesurée avec un viscosimètre rotatif de type BH dans des conditions de 23°C, une broche n° 7 et 20 tr/min ; et
une viscosité à 23°C de la matière première de moulage est de 600 Pa·s ou plus, mesurée avec un viscosimètre de type capillaire dans des conditions de 23°C, une filière de 1 mm de diamètre et de 10 mm de longueur, et un taux de cisaillement de 121,6 s⁻¹ ;
**caractérisé en ce que** la quantité de matière particulaire réticulée dans la matière première de moulage est de 35% en masse ou plus et de 85% en masse ou moins, par rapport à la quantité totale de la matière première de moulage.

2. Une matière première de moulage pour extrusion, la matière première de moulage étant un mélange de :
une première matière liquide comprenant du caoutchouc silicone liquide et ayant une viscosité à 23°C inférieure à 600 Pa·s, mesurée avec un viscosimètre rotatif de type BH dans des conditions de 23°C, une broche n° 7 et 20 tr/min ; et
une matière particulaire réticulée obtenue par le fait de réticuler dynamiquement une deuxième matière liquide comprenant du caoutchouc silicone liquide,
la matière première de moulage ayant une viscosité à 23°C de 600 Pa·s ou plus, mesurée avec un viscosimètre de type capillaire dans des conditions de 23°C, une filière de 1 mm de diamètre et de 10 mm de longueur, et un taux de cisaillement de 121,6 s⁻¹ ;
**caractérisée en ce que** la quantité de matière particulaire réticulée dans la matière première de moulage est de 35% en masse ou plus et de 85% en masse ou moins, par rapport à la quantité totale de la matière première de moulage.

3. Un article moulé par extrusion préparé en extrudant la matière première de moulage selon la revendication 2.

4. Un procédé de production d'une matière première de moulage pour extrusion, comprenant :
une étape de mélange d'une matière particulaire réticulée obtenue en réticulant dynamiquement une deuxième matière liquide comprenant du caoutchouc silicone liquide, dans une première matière liquide comprenant du caoutchouc silicone liquide et ayant une viscosité à 23°C inférieure à 600 Pa·s, mesurée avec un viscosimètre rotatif de type BH dans des conditions de 23°C, une broche n° 7 et 20 tr/min, pour obtenir une matière première de moulage pour extrusion ayant une viscosité à 23°C de 600 Pa·s ou plus, mesurée avec un viscosimètre de type capillaire dans des conditions de 23°C, une filière de 1 mm de diamètre et de 10 mm de longueur, et un taux de cisaillement de 121,6 s⁻¹ ;
**caractérisé en ce que** la quantité de matière particulaire réticulée dans la matière première de moulage est de 35% en masse ou plus et de 85% en masse ou moins, par rapport à la quantité totale de la matière première de moulage.
